# EUROPEAN PATENT APPLICATION

(11) **EP 2 317 797 A1**
(43) Date of publication of application: **04.05.2011**
(21) Application number: 09806751.5
(22) Date of filing: 13.08.2009
(51) Int. Cl.: H04W 36/14, H04W 48/18, H04W 80/06

(54) **HANDOVER METHOD AND WIRELESS ACCESS NETWORK DEVICE**

(30) Priority: 15.08.2008 JP 2008209385
(71) Applicant: NTT DOCOMO, INC., Chiyoda-ku Tokyo 100-6150 (JP)
(72) Inventor: HAPSARI, Wuri Andarmawanti, Chiyoda-ku Tokyo 100-6150 (JP); UCHIYAMA, Tadashi, Chiyoda-ku Tokyo 100-6150 (JP)
(74) Representative: HOFFMANN EITLE
(86) International application number: PCT/JP2009/064310
(87) International publication number: WO 2010/018860

(57) **Abstract**

Disclosed is a handover method that comprises a step wherein a radio access network apparatus on a first mobile communication system acquires and stores service identification information which specifies the services offered to a mobile station, and a step wherein the radio access network apparatus on the first mobile communication system, in the procedure to perform a hard handover, determines, based on the service identification information, whether to forward downlink data received from a upper node to a radio access network apparatus on a second mobile communication system that is not equipped with a re-ordering function for incoming downlink data.

## Description

### TECHNICAL FIELD

The present invention relates to a handover method and a radio access network apparatus for a mobile station to perform a hard handover from a cell under control of a first mobile communication system to another cell under control of a second mobile communication system.

### BACKGROUND ART

In the mobile communication system specified in the 3GPP, a radio control apparatus RNC does not support "re-ordering function" in handover processing by a mobile station UE from a cell under control of a mobile communication system of E-UTRAN scheme to another cell under control of a mobile communication system of UTRAN scheme.

Here, the "re-ordering function" is a function of re-ordering received data in a proper order. For example, the "re-ordering function" is configured to receive data pieces from different network apparatuses at the same "Tunnel End Point", and to distinguish data pieces transmitted from each network apparatus from the others among the data stored in a buffer for "Tunnel End Point", then to forward these data pieces in a proper order.

### SUMMARY OF THE INVENTION

### PROBLEM TO BE SOLVED BY THE INVENTION

However, the above-described mobile communication system has a problem in that, in a procedure for performing a hard handover, when a mobile station UE has activated a first application that provides service using TCP, dropout of data in a window size causes a deadlock in the first application, while the mobile station has activated a second application that provides service using UDP, occurrence of reversal order of the sequence numbers of received data causes a deadlock in the second application.

In this respect, the present invention has been made in view of the above-described problem, and it is an object of the invention to provide a handover method and a radio access network apparatus that can prevent an occurrence of a deadlock in application running in the mobile station in a procedure for performing a hard handover.

### MEANS FOR SOLVING THE PROBLEMS

A first feature of the present invention is summarized as a handover method for a mobile station to perform a hard handover from a cell under control of a first mobile communication system to another cell under control of a second mobile communication system, the handover method comprising the steps of: a step A of acquiring and storing, at a radio access network apparatus of the first mobile communication system, service identification information which identifies a service provided to the mobile station; and a step B of determining, at the radio access network apparatus of the first mobile communication system, whether or not to forward downlink data received from an upper node to a radio access network apparatus of the second mobile communication system which has no re-ordering function of the received downlink data, the determination being performed, based on the service identification information in a procedure for performing the hard handover.

A first feature of the present invention is summarized as a radio access network apparatus of a first mobile communication system used in a mobile communication system in which a mobile station performs a hard handover from a cell under control of the first mobile communication system to another cell under control of a second mobile communication system, the radio access network apparatus comprising: an acquisition unit configured to acquire and store service identification information which identifies a service provided to the mobile station; and a determining unit configured to determine whether or not to forward downlink data received from an upper node to a radio access network apparatus of the second mobile communication system, which has no re-ordering function of the received downlink data, based on the service identification information in a procedure for performing the hard handover.

### EFFECT OF THE INVENTION

As described above, according to the present invention, provided are a handover method and a radio access network apparatus that can prevent an occurrence of a deadlock in application running in the mobile station in a procedure for performing a hard handover.

### BRIEF DESCRIPTION OF THE DRAWINGS

[FIG. 1] FIG. 1 is the overall configuration of a mobile communication system according to a first embodiment of the present invention.
[FIG. 2] FIG. 2 is a functional block diagram of the radio base station according to the first embodiment of the present invention.
[FIG. 3] FIG. 3 is a sequence diagram showing an attach procedure of a mobile station in the mobile communication system according to the first embodiment of the present invention.
[FIG. 4] FIG. 4 is a sequence diagram showing a procedure that a mobile station transits from an idle state to an active state in the mobile communication system according to the first embodiment of the present invention.
[FIG. 5] FIG. 5 is a sequence diagram showing a bearer setup procedure of a mobile station in the mobile communication system according to the first embodiment of the present invention.
[FIG. 6] FIG. 6 is a sequence diagram showing an inter-RAT handover procedure (preparation phase) of a mobile station in the mobile communication system according to the first embodiment of the present invention.
[FIG. 7] FIG. 7 is a sequence diagram showing the inter-RAT handover procedure (execution phase) of a mobile station in the mobile communication system according to the first embodiment of the present invention.
[FIG. 8] FIG. 8 is a flowchart showing the operation of a radio base station according to the first embodiment of the present invention.

### EMBODIMENTS FOR CARRYING OUT THE INVENTION

### (Configuration of Mobile Communication System according to First Embodiment of Present Invention)

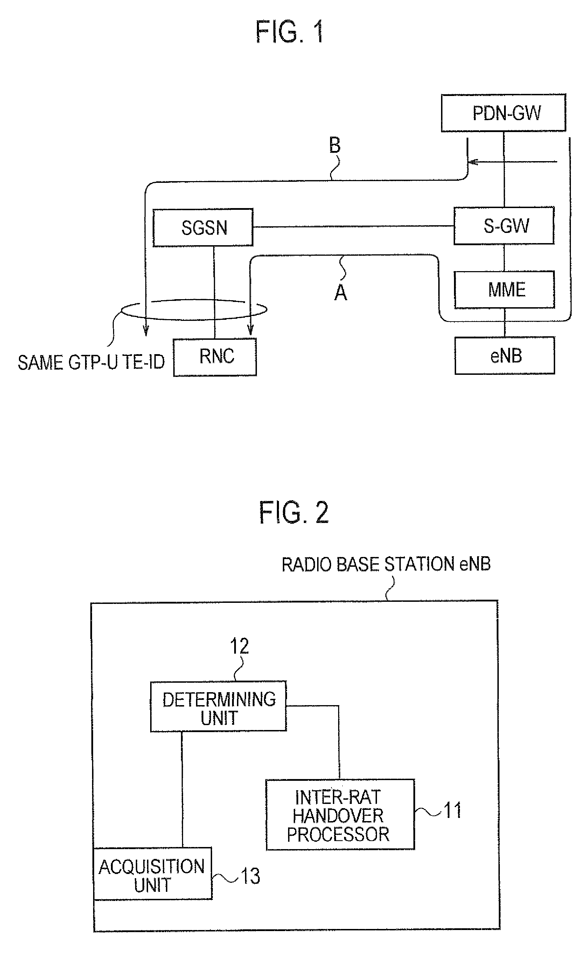

The configuration of a mobile communication system according to the first embodiment of the present invention is described with reference to FIGS. 1 and 2.

As shown in FIG. 1, in the mobile communication system according to the present embodiment, a mobile communication system of the LTE (Long Term Evolution) scheme (the first mobile communication system), and a mobile communication system of the WCDMA scheme (the second mobile communication system) coexist.

The mobile communication system according to the present embodiment includes a gateway device PDN-GW, a gateway device S-GW, a mobile switching center MME of the LTE scheme, a radio base station eNB of the LTE scheme (radio access network apparatus of the first mobile communication system), a packet mobile switching center SGSN of the WCDMA scheme, a radio control apparatus RNC of the WCDMA scheme (radio access network apparatus of the second mobile communication system), and a radio base station NodeB of the WCDMA scheme which is not shown (radio access network apparatus of the second mobile communication system).

When the mobile station UE performs an inter-RAT handover (hard handover) from a cell under control of a mobile communication system of the LTE scheme to another cell under control of a mobile communication system of the WCDMA scheme, and the radio base station eNB of the LTE scheme performs data forward to the radio control apparatus RNC of the WCDMA scheme, downlink data A which reaches via route A from the gateway device PDN-GW, and downlink data B which reaches via route B from the gateway device PDN-GW coexist in the radio control apparatus RNC of the WCDMA scheme.

Here, the downlink data A and the downlink data B are received at the same GTP-U TE-ID in the radio control apparatus RNC of the WCDMA scheme through a GTP tunnel established between the mobile switching center SGSN of the WCDMA scheme and the radio control apparatus RNC of the WCDMA scheme.

The radio control apparatus RNC of the WCDMA scheme is assumed not to support the above-mentioned re-ordering function.

As shown in FIG. 2, the radio base station eNB according to the present embodiment includes an inter-RAT handover processor 11, a determining unit 12, and an acquisition unit 13.

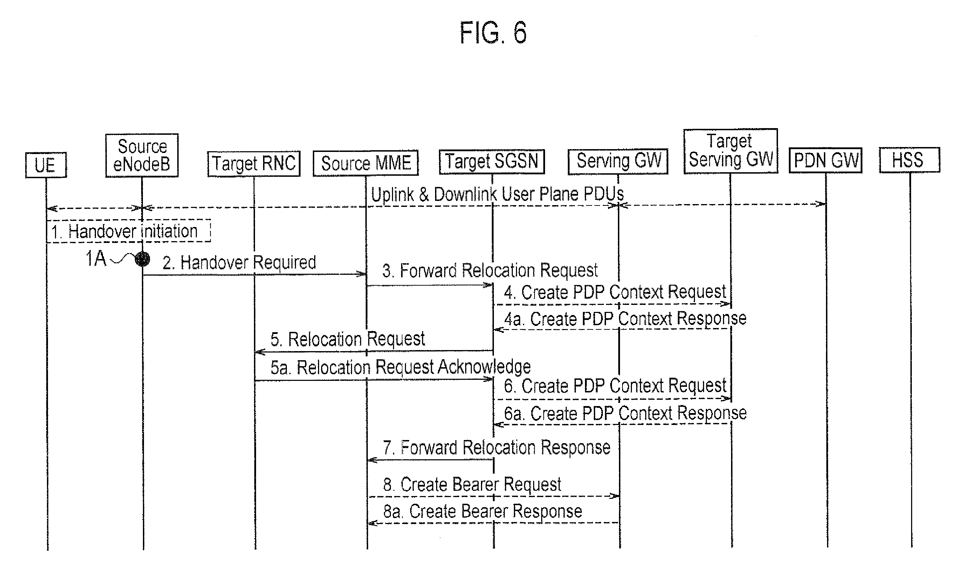

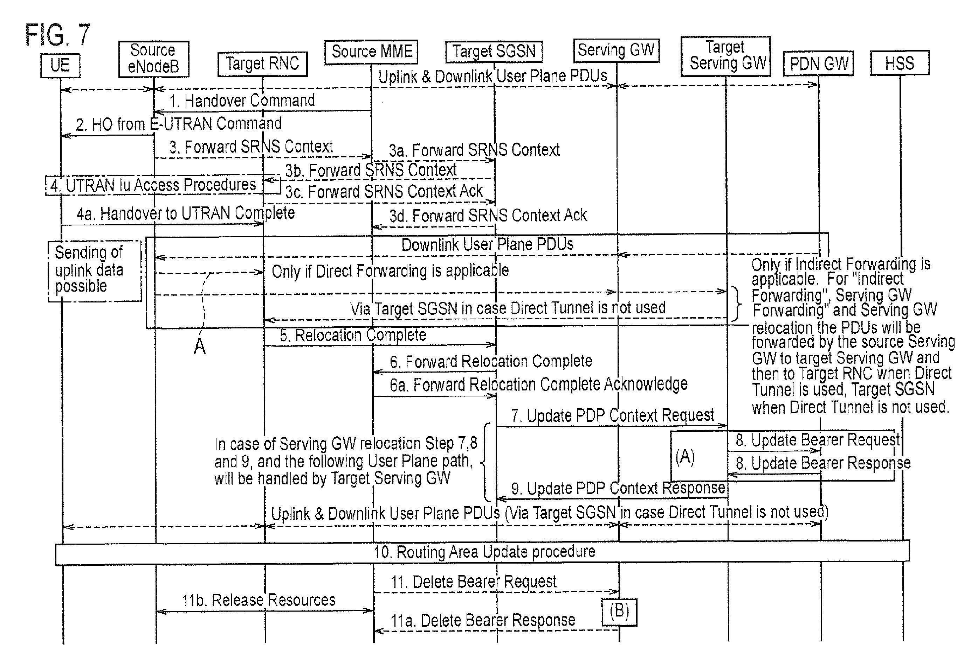

The inter-RAT handover processor 11 is configured to perform processing needed in the later-described procedure for performing an inter-RAT handover shown in FIGS. 6 and 7 (hereinafter referred to as an inter-RAT handover procedure).

The determining unit 12 is configured to determine whether or not to forward the downlink data received from the gateway device PDN-GW (upper node) to the radio control apparatus RNC of the mobile communication system of the WCDMA scheme, which has no re-ordering function, based on service identification information in an inter-RAT handover procedure.

The service identification information identifies the quality requirement characteristics of the application which has been activated in each mobile station UE, and is set to a bearer which carries the data of the application. The service identification information may include "QCI (QoS Class Identifier)", "ARP (Allocation and Retention Priority)", or the like defined in the 3GPP.

Specifically, the determining unit 12 is configured to determine to forward the downlink data to the radio control apparatus RNC of the mobile communication system of the WCDMA scheme when the service identification information identifies a service using TCP. The determining unit 12 may be configured to determine not to forward the downlink data to the radio control apparatus RNC of the mobile communication system of the WCDMA scheme when the service identification information identifies a service using UDP.

For example, when "QCI=#10" configured in a core network is quality requirement characteristics in the form of "Non-GBR", "Packet Error Rate=#1", "Packet Delay Budget=xx (ms)", and "service using TCP", the determining unit 12 may determine to forward the downlink data by the service identified by "QCI=#10" to the radio control apparatus RNC of the mobile communication system of the WCDMA scheme by assuming that "Radio Scheduler configuration =#1" and "RLC AM" have been applied to the downlink data.

Also, when "QCI=#20" configured in the core network is quality requirement characteristics in the form of "Non-G-BR", "Packet Error Rate=#1", "Packet Delay Budget=xx (ms)", and "service using UDP", the determining unit 12 may determine not to forward the downlink data by the service identified by "QCI=#20" to the radio control apparatus RNC of the mobile communication system of the WCDMA scheme although the downlink data has been configured with "Radio Scheduler configuration =#1" and "RLC AM" being applied to the downlink data.

That is to say, by setting different QCIs to two different bearers with the same quality requirement characteristics, the bearers can be treated as different data forwards.

Also, when "APR=#a" is configured as user contract identification #B in the core network, the determining unit 12 may determine not to forward the downlink data by the service identified by "ARP=#a" to the radio control apparatus RNC of the mobile communication system of the WCDMA scheme although the determining unit 12 determines that "RLC AM" has been applied to the downlink data in the case of "QCI=#1."

Also, the determining unit 12 may determine not to forward the downlink data by the service identified by "ARP=#a" to the radio control apparatus RNC of the mobile communication system of the WCDMA scheme regardless of the value of "QCI."

The acquisition unit 13 is configured to acquire and store the service identification information which identifies the service provided to the mobile station UE.

For example, the acquisition unit 13 may be configured to acquire and store the service identification information included in an attach accept response (Attach Accept) transmitted from the mobile switching center MME of the mobile communication system of the LTE scheme in an attach procedure of the mobile station UE.

Also, the acquisition unit 13 may be configured to acquire and store the service identification information included in an initial context setup request (S1-AP) transmitted from the mobile switching center MME of the mobile communication system of the LTE scheme in a procedure that the mobile station UE transits from an idle state to an active state.

Furthermore, the acquisition unit 13 may be configured to acquire and store the service identification information included in a bearer setup request transmitted from the mobile switching center MME of the mobile communication system of the LTE scheme in a bearer setup procedure of the mobile station UE.

### (Operation of Mobile Communication System according to First Embodiment of Present invention)

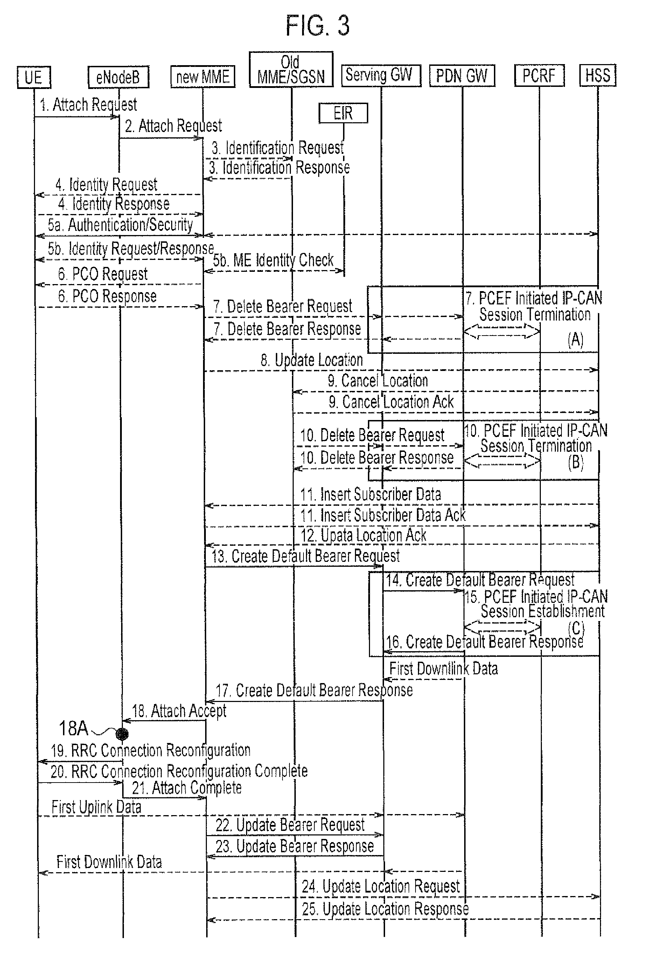

The operation of a mobile communication system according to the first embodiment of the present invention is described with reference to FIGS. 3 to 9.

First, referring to FIG. 3, the operation of the radio base station eNB of the LTE scheme for acquiring and storing the service identification information related to the mobile station UE in an attach procedure of the mobile station UE in the mobile communication system according to the present embodiment is described.

FIG. 3 shows the attach procedure of the mobile station UE in the mobile communication system according to the present embodiment. In step 18 in FIG. 3, the mobile switching center MME of the LTE scheme transmits an attach accept response (Attach Accept) to the radio base station eNB of the LTE scheme, and in step 18A in FIG. 3, the radio base station eNB of the LTE scheme acquires and stores the service identification information (QCI or ARP) included in received attach accept response.

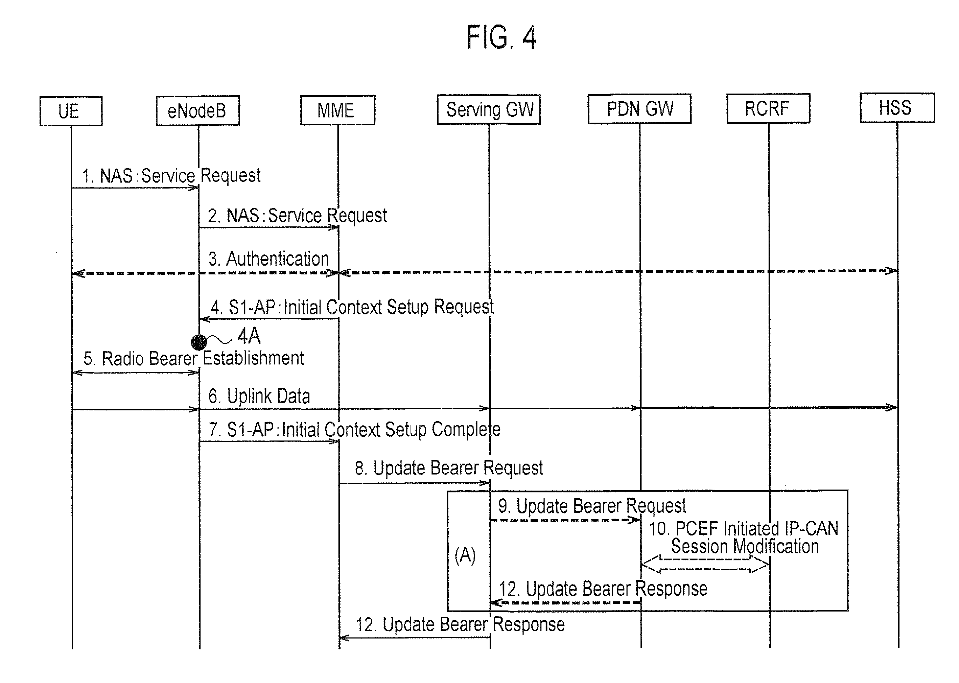

Second, referring to FIG. 4, the operation of the radio base station eNB of the LTE scheme for acquiring and storing the service identification information related to the mobile station UE in a procedure that the mobile station UE transits from idle information to an active state in the mobile communication system according to the present embodiment is described.

FIG. 4 shows a procedure that the mobile station UE transits from idle information to an active state in the mobile communication system according to the present embodiment. In step 4 in FIG. 4, the mobile switching center MME of the LTE scheme transmits an initial context setup request (S1-AP) to the radio base station eNB of the LTE scheme, and in step 4A in FIG. 4, the radio base station eNB of the LTE scheme acquires and stores the service identification information (QCI or ARP) included in the received initial context setup request.

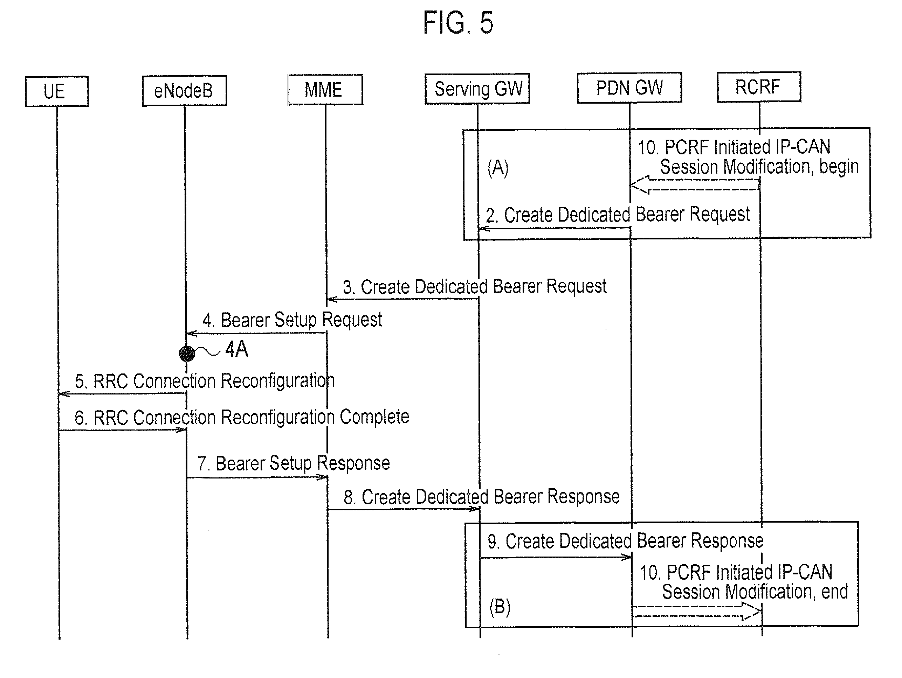

Third, referring to FIG. 5, the operation of the radio base station eNB of the LTE scheme for acquiring and storing the service identification information related to the mobile station UE in a bearer setup procedure of the mobile station UE in the mobile communication system according to the present embodiment is described.

FIG. 5 shows a bearer setup procedure of the mobile station UE in the mobile communication system according to the present embodiment. In step 4 in FIG. 5, the mobile switching center MME of the LTE scheme transmits a bearer setup request to the radio base station eNB of the LTE scheme, in step 4A in FIG. 5, the radio base station eNB of the LTE scheme acquires and stores the service identification information (QCI or ARP) included in the received bearer setup request.

Fourth, referring to FIG. 6, a sequence of preparation stages for an inter-RAT handover procedure of the mobile station UE in the mobile communication system according to the present embodiment is shown.

In step 1A in FIG. 6, the radio base station eNB of the LTE scheme determines whether or not the downlink data needs to be forwarded to each bearer in an inter-RAT handover procedure based on the stored service identification information. In order to notify the handover destination radio control apparatus RNC of data forward necessity information indicating the determination result, a handover request signal (Handover Required) including the data forward necessity information is transmitted to the handover source mobile switching center (mobile switching center of the LTE scheme) MME. The data forward necessity information may be transmitted separately from the handover request signal (Handover Required).

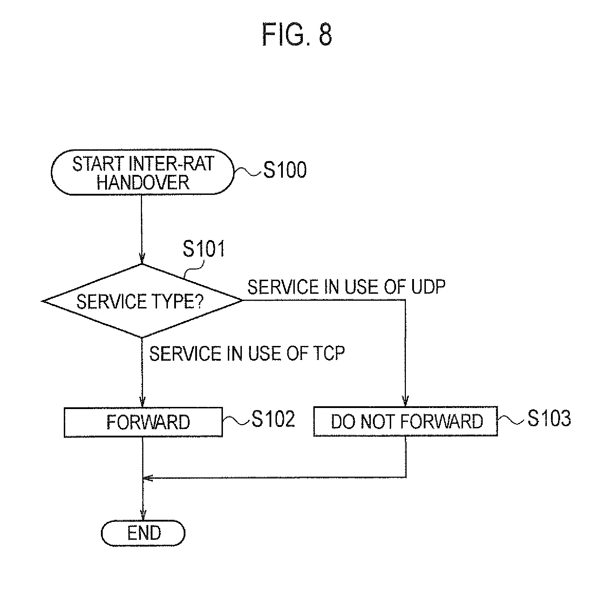

The determination operation is described with reference to FIG. 8. As shown in FIG. 8, when an inter-RAT handover procedure is started in step S100, the radio base station eNB of the LTE scheme determines whether the service identified by the service identification information is a service using TCP or a service using UDP in step S101.

When the service is determined to be the one using TCP, in step S102, the radio base station eNB of the LTE scheme determines to forward the downlink data (Downlink User Plane PDU) transmitted from the gateway device PDN-GW to the handover destination radio control apparatus (radio control apparatus of the WCDMA scheme) RNC.

On the other hand, when the service is determined to be the one using UDP, in step S103, the radio base station eNB of the LTE scheme determines not to forward the downlink data (Downlink User Plane PDU) transmitted from the gateway device PDN-GW to the handover destination radio control apparatus (radio control apparatus of the WCDMA scheme) RNC.

The handover destination radio control apparatus RNC determines whether or not to forward the downlink data to each bearer which may be a target of the handover processing based on the resource use status of the handover destination radio control apparatus RNC.

The radio base station eNB of the LTE scheme is notified of GTP-U TEID for data forward for each bearer, to which downlink data is determined to be forwarded, by a handover instruction signal (Handover Command (step 1 in FIG. 7)).

Fifth, referring to FIG. 7, a sequence of execution stages for an inter-RAT handover procedure of the mobile station UE in the mobile communication system according to the present embodiment is shown.

In step A in FIG. 7, the radio base station eNB of the LTE scheme forwards the downlink data (Downlink User Plane PDU) transmitted from the gateway device PDN-GW to the handover destination radio control apparatus (radio control apparatus of the WCDMA scheme) RNC by using a confirmation result whether the downlink data is forwarded to each bearer or not, from the above-described handover destination radio control apparatus RNC.

### (Advantages and Effects of Mobile Communication System according to First Embodiment of Present Invention)

According to the mobile communication system according to the first embodiment of the present invention, in an inter-RAT handover procedure, the radio base station eNB of the LTE scheme, which is a handover source radio access network apparatus, determines whether or not to forward the downlink data (Downlink User Plane PDU) transmitted from the gateway device PDN-GW to the handover destination radio control apparatus (radio control apparatus of the WCDMA scheme) RNC according to the type of application running in each mobile station UE (service using TCP, or service using UDP), thus an occurrence of a deadlock in the application running in each mobile station UE can be prevented.

The feature of the present embodiment described above may be expressed as follows.

The first feature of the present embodiment is a handover method for the mobile station UE to perform an inter-RAT handover (hard handover) from a cell under control of a mobile communication system of the LTE scheme (the first mobile communication system) to another cell under control of a mobile communication system of the WCDMA scheme (the second mobile communication system), and the handover method includes a step A, in which the radio base station eNB of the mobile communication system of the LTE scheme (radio access network apparatus of the first mobile communication system) acquires and stores the service identification information (QCI or ARP) which identifies the service provided to the mobile station UE; and a step B, in which in a procedure for performing an inter-RAT handover, based on the service identification information, the radio base station eNB of the mobile communication system of the LTE scheme determines whether or not to forward the downlink data received from the upper node (gateway device PDN-GW) to the radio control apparatus RNC (radio access network apparatus of the second mobile communication system) of the mobile communication system of the WCDMA scheme, which has no re-ordering function of the received downlink data.

In the first feature of the present embodiment, in the step B, the radio base station eNB of the mobile communication system of the LTE scheme determines to forward downlink data to the radio control apparatus RNC of the mobile communication system of the WCDMA scheme when the service identification information identifies a service using TCP, and in the step B, the radio base station eNB of the mobile communication system of the LTE scheme may determine not to forward downlink data to the radio control apparatus RNC of the mobile communication system of the WCDMA scheme when the service identification information identifies a service using UDP.

In the first feature of the present embodiment, in the step A, the radio base station eNB of the mobile communication system of the LTE scheme may acquire and store the service identification information included in an attach accept response (Attach Accept) transmitted from the mobile switching center MME of the mobile communication system of the LTE scheme in an attach procedure of the mobile station UE.

In the first feature of the present embodiment, in the step A, the radio base station eNB of the mobile communication system of the LTE scheme may acquire and store the service identification information included in an initial context setup request (S1-AP) transmitted from the mobile switching center MME of the mobile communication system of the LTE scheme in a procedure that the mobile station UE transits from an idle state to an active state.

In the first feature of the present embodiment, in the step A, the radio base station eNB of the mobile communication system of the LTE scheme may acquire and store the service identification information included in a bearer setup request transmitted from the mobile switching center MME of the mobile communication system of the LTE scheme in a bearer setup procedure of the mobile station UE.

In the first feature of the present embodiment, the handover method further includes a step of, by the upper node (core network device), mapping a service type or a user contract identification on the service identification information, and, in the step B, the radio base station eNB of the mobile communication system of the LTE scheme may perform the above-mentioned determination based on the service type or the user contract identification mapped on the service identification information.

The second feature of the present embodiment is the radio base station eNB of the mobile communication system of the LTE scheme used in a mobile communication system, in which the mobile station UE performs an inter-RAT handover from a cell under control of a mobile communication system of the LTE scheme to another cell under control of a mobile communication system of the WCDMA scheme, the radio base station eNB including: the acquisition unit 13 configured to acquire and store the service identification information which identifies a service provided to the mobile station; and the determining unit 12 configured to determine whether or not to forward downlink data received from an upper node to the radio control apparatus RNC of the mobile communication system of the WCDMA scheme, which has no re-ordering function of the received downlink data, based on the service identification information in a procedure for performing an inter-RAT handover.

Note that operation of the above described radio base station eNB and the mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the radio base station eNB and the mobile station UE. Also, the storage medium and the processor may be provided in the radio base station eNB and the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A handover method for a mobile station to perform a hard handover from a cell under control of a first mobile communication system to another cell under control of a second mobile communication system, the handover method comprising the steps of:
a step A of acquiring and storing, at a radio access network apparatus of the first mobile communication system, service identification information which identifies a service provided to the mobile station; and
a step B of determining, at the radio access network apparatus of the first mobile communication system, whether or not to forward downlink data received from an upper node to a radio access network apparatus of the second mobile communication system which has no re-ordering function of the received downlink data, the determination being performed, based on the service identification information in a procedure for performing the hard handover.

2. The handover method according to claim 1,
wherein in the step B, when determining that "RLC AM" is applied to the downlink data, based on the service identification information, the radio access network apparatus of the first mobile communication system forwards the downlink data to the radio access network apparatus of the second mobile communication system.

3. The handover method according to claim 1,
wherein in the step A, the radio access network apparatus of the first mobile communication system acquires and stores the service identification information included in an attach accept response transmitted from a mobile switching center of the first mobile communication system in an attach procedure of the mobile station.

4. The handover method according to claim 1,
wherein in the step A, the radio access network apparatus of the first mobile communication system acquires and stores the service identification information included in an initial context setup request transmitted from a mobile switching center of the first mobile communication system in a procedure that the mobile station transits from an idle state to an active state.

5. The handover method according to claim 1,
wherein in the step A, the radio access network apparatus of the first mobile communication system acquires and stores the service identification information included in a bearer setup request transmitted from a mobile switching center of the first mobile communication system in a bearer setup procedure of the mobile station.

6. The handover method according to claim 1, further including a step of mapping, at the upper node, a service type or a user contract identification on the service identification information,
wherein in the step B, the radio access network apparatus of the first mobile communication system performs the determination based on the service type or the user contract identification mapped on the service identification information.

7. The handover method according to any one of claims 1 to 6, wherein QCI (QoS Class Identifier) is used as the service identification information.

8. A radio access network apparatus of a first mobile communication system used in a mobile communication system in which a mobile station performs a hard handover from a cell under control of the first mobile communication system to another cell under control of a second mobile communication system, the radio access network apparatus comprising:
an acquisition unit configured to acquire and store service identification information which identifies a service provided to the mobile station; and
a determining unit configured to determine whether or not to forward downlink data received from an upper node to a radio access network apparatus of the second mobile communication system, which has no re-ordering function of the received downlink data, based on the service identification information in a procedure for performing the hard handover.

9. The radio access network apparatus according to claim 8,
wherein the determining unit is configured to determine to forward the downlink data to the radio access network apparatus of the second mobile communication system when the determining unit determines that "RLC AM" is applied to the downlink data, based on the service identification information.

10. The radio access network apparatus according to claim 8,
wherein the acquisition unit is configured to acquire and store the service identification information included in an attach accept response transmitted from a mobile switching center of the first mobile communication system in an attach procedure of the mobile station.

11. The radio access network apparatus according to claim 8,
wherein the acquisition unit is configured to acquire and store the service identification information included in an initial context setup request transmitted from a mobile switching center of the first mobile communication system in a procedure that the mobile station transits from an idle state to an active state.

12. The radio access network apparatus according to claim 8,
wherein the acquisition unit is configured to acquire and store the service identification information included in a bearer setup request transmitted from a mobile switching center of the first mobile communication system in a bearer setup procedure of the mobile station.

13. The radio access network apparatus according to any one of claims 8 to 12, wherein QCI (QoS Class Identifier) is used as the service identification information.
